# EUROPÄISCHE PATENTSCHRIFT

(11) **EP 2 490 150 B1**
(45) Veröffentlichungstag und Bekanntmachung des Hinweises auf die Patenterteilung: **07.01.2015**
(21) Anmeldenummer: 12151716.3
(22) Anmeldetag: 19.01.2012
(51) Int. Cl.: G06K 7/10

(54) **RFID-Lesetunnel und Verfahren zum Auslesen von RFID-Transpondern**
RFID reading tunnel and method for reading RFID transponders
Tunnel de lecture RFID et procédé de lecture de transpondeurs RFID

(30) Priorität: 21.02.2011 DE 102011000852
(43) Veröffentlichungstag der Anmeldung: 22.08.2012
(73) Patentinhaber: Sick AG, 79183 Waldkirch (DE)
(72) Erfinder: Torabi, Bahram, 79100 Freiburg (DE)
(74) Vertreter: Hehl, Ulrich

(56) Entgegenhaltungen:
- EP-A2- 1 047 011
- WO-A1-2005/104023
- WO-A1-2008/092803
- DE-A1-102005 036 088
- US-A- 5 793 305
- US-A- 6 104 291
- US-A1- 2006 125 640
- US-A1- 2006 244 607
- US-A1- 2007 030 150

## Beschreibung

Die Erfindung betrifft einen RFID-Lesetunnel mit mindestens einer an einem Lesebereich eines Förderers oder eines Durchgangs montierten RFID-Lesevorrichtung sowie ein Verfahren zum Auslesen von RFID-Transpondern nach dem Oberbegriff von Anspruch 1 beziehungsweise 9.

RFID-Lesesysteme dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

Ein häufiger Einsatzort eines RFID-Lesesystems ist die Montage an einem Förderband, auf dem die Waren gefördert werden, oder in einem sogenannten Leseportal. Darunter ist ein beliebiger Durchgang zu verstehen, welcher mit einem oder mehreren RFID-Lesern und möglicherweise weiteren Sensoren ausgestattet ist. Objekte werden mittels eines Förderbandes, eines Transportfahrzeugs, wie ein Gabelstapler, oder auch von Hand durch das Leseportal bewegt und dabei anhand ihres RFID-Transponders identifiziert.

RFID-Transponder können prinzipiell aktiv sein, also eine eigene Energieversorgung aufweisen und selbstständig elektromagnetische Strahlung erzeugen. In der Praxis eignen sich diese Transponder für die Logistik aber weniger, weil durch die Energieversorgung die Stückpreise solcher Transponder nicht das für den Massenmarkt erforderliche geringe Niveau erreichen können. Deshalb werden zumeist passive Transponder ohne eigene Energieversorgung eingesetzt. In beiden Fällen wird durch elektromagnetische Strahlung des Lesegerätes der Transponder zur Abstrahlung der gespeicherten Information angeregt, wobei passive Transponder die notwendige Energie aus der Sendeenergie des Lesesystems beziehen. In dem etablierten Ultrahochfrequenzstandard ISO 18000-6 werden passive Transponder nach dem Backscatter-Verfahren ausgelesen.

Die Lesereichweite eines RFID-Systems, besonders in dem Ultrahochfrequenzbereich, ist mit zehn Metern und mehr sehr hoch. Deshalb werden auch Transponder ausgelesen, die sich gar nicht in dem vorgesehenen Lesebereich befinden. Metallische Objekte in dem Lesebereich verstärken diesen unerwünschten Effekt noch, weil sie zu Reflexionen und damit Mehrwegeausbreitung führen. Auf diese Weise können sogar Transponder hinter der Antenne gelesen werden.

Das RFID-System hat aber zunächst keine Möglichkeit, die Quelle der erfolgreich aus dem Transponder ausgelesenen Informationen zu lokalisieren. Dadurch kann die ausgelesene Information nicht zuverlässig dem Objekt im Lesebereich zugeordnet werden. In der praktischen Anwendung wird jedoch eine räumlich selektive Lesung angestrebt. Beispielsweise sollen an einem Förderband nur Transponder von Objekten ausgewertet werden, die auch tatsächlich auf dem Förderband bewegt werden, und an einem Leseportal nur solche, die das Leseportal durchqueren.

Ein Ansatz, um die korrekte Zuordnung aus einem Transponder gelesener Information zu einem Objekt im Lesebereich zu gewährleisten, besteht darin, die Richtung zu bestimmen, aus dem das RFID-Signal empfangen wurde. Dazu werden Signalstärke-(RSSI) und Phasenverfahren eingesetzt. Beides führt aber zu einem erheblichen Mehraufwand und einer komplizierten Auswertung, die nicht unter allen Bedingungen zuverlässig ist.

Weiterhin wird herkömmlich versucht, durch Schirmungsmaßnahmen das Sendesignal des RFID-Lesers so einzuschränken, dass RFID-Transponder, die nicht im Lesebereich liegen, gar nicht erst angesprochen werden. Umgekehrt soll die Abschirmung verhindern, dass die Antwort von RFID-Transpondern außerhalb des Lesefeldes die Empfangsantenne erreicht. Eine solche Abschirmung erfordert einen sehr großen Aufwand, und es gibt dennoch Fälle, in denen die Schirmungsmaßnahmen unwirksam werden. Eine wesentliche Ursache hierfür sind Reflexionen, vor allem an den Objekten in dem Lesebereich selbst, die das Sendesignal in den Außenbereich der Abschirmung beziehungsweise das Empfangssignal von dort zu der Empfangsantenne umleiten.

WO 2005/104023 offenbart einen herkömmlichen RFID-Leser.

Es ist daher Aufgabe der Erfindung, die Anzahl an Falschlesungen von Transpondern außerhalb des Lesebereichs zu reduzieren.

Diese Aufgabe wird durch einen RFID-Lesetunnel mit mindestens einer an einem Lesebereich eines Förderers oder eines Durchgangs montierten RFID-Lesevorrichtung und ein Verfahren zum Auslesen von RFID-Transpondern gemäß Anspruch 1 beziehungsweise 9 gelöst. Dabei geht die Erfindung von dem Grundgedanken aus, eine zusätzliche Empfangsantenne zu verwenden, die gezielt auf RFID-Signale außerhalb des Lesetunnels lauscht. Diese zusätzliche Empfangsantenne wird demnach so angebracht, dass RFID-Signale aus dem Lesebereich möglichst nicht empfangen werden. In der praktischen Anwendung wird nicht restlos auszuschließen sein, dass nach Mehrfachreflexionen auch RFID-Signale aus dem Lesebereich zu der zusätzlichen Empfangsantenne gelangen. Sehr wohl ist aber möglich, die Wahrscheinlichkeit solcher Ereignisse erheblich zu reduzieren, und zwar auch stärker, als umgekehrt die Wahrscheinlichkeit zu reduzieren, dass ein RFID-Signal von außerhalb des Lesetunnels die eigentliche Lese-Empfangsantenne erreicht. Dazu wird die zusätzliche Empfangsantenne beispielsweise in genügend großem Abstand, ohne direkte Sichtlinie auf den Lesebereich und/oder hinter einem oder mehreren für elektromagnetische Strahlung undurchlässigen Hindernissen angebracht und ausgerichtet. Zudem kann dafür gesorgt werden, dass die zusätzliche Empfangsantenne RFID-Signale aus Bereichen gut empfängt, aus denen eine Falschlesung durch die Lese-Empfangsantenne erwartet wird, also beispielsweise die Ein- und Austrittsbereiche des RFID-Lesetunnels oder weitere RFID-Lesestationen in der Nähe des eigenen RFID-Lesetunnels.

Mit Hilfe des Empfangssignals der zusätzlichen Empfangsantenne wird dann eine Falschlesungsüberprüfung vorgenommen. Wenn sowohl die Lese-Empfangsantenne als auch die zusätzliche Empfangsantenne ein RFID-Signal empfangen haben, kann der zugehörige Transponder sich nicht in dem Lesebereich befinden, weil die zusätzliche Empfangsantenne von dort keine Signale empfängt. Derartige RFID-Informationen werden deshalb als Falschlesung angesehen und verworfen.

Die Erfindung hat den Vorteil, dass die Anzahl von Falschlesungen reduziert wird. Dabei handelt es sich, wie oben beschrieben, nicht um Fehllesungen, bei denen ein Transponder nicht gelesen werden konnte ("negative false read"), sondern im Gegenteil um eine erfolgreiche Lesung, die aber Informationen eines Transponders liefert, der sich nicht im Lesebereich befindet und die deshalb gar nicht oder zumindest nicht zu diesem Zeitpunkt hätte gelesen werden sollen ("positive false read"). Dadurch erhöht sich die Zuverlässigkeit des RFID-Tunnels. Es wird ein noch höherer Grad an Automatisierung erreicht, und händische Nachbearbeitung oder gar Fehlzuordnungen von RFID-Informationen zu Objekten werden verhindert.

Vorzugsweise ist die Auswertungseinheit dafür ausgebildet, RFID-Informationen sowohl aus mit der Lese-Empfangsantenne empfangenen RFID-Signalen als auch mit der zusätzlichen Empfangsantenne empfangenen RFID-Signalen auszulesen und bei der Falschlesungsüberprüfung die RFID-Informationen der Lese-Empfangsantenne und der zusätzlichen Empfangsantenne miteinander zu vergleichen. Die Fehlleseüberprüfung erfolgt somit auf Ebene der bereits dekodierten RFID-Information. Konnte ein und derselbe Transponder erfolgreich sowohl über die Lese-Empfangsantenne wie über die zusätzliche Empfangsantenne ausgelesen werden, so wird auf eine Position des zugehörigen Transponders außerhalb des Lesebereichs rückgeschlossen, und die RFID-Informationen werden verworfen.

Die Auswertungseinheit ist bevorzugt dafür ausgebildet, bei der Falschlesungsüberprüfung die RFID-Signale der Lese-Empfangsantenne und der zusätzlichen Empfangsantenne miteinander zu vergleichen. Die Fehlleseüberprüfung erfolgt hier gemäß einem nicht beanspruchten Beispiel also auf einer sehr hardwarenahen Ebene der elektromagnetischen RFID-Signale selbst. Dies kann einen Vergleich auf Ebene der RFID-Information unterstützen oder ersetzen. Die RFID-Signale werden in aller Regel nicht direkt vergleichbar sein, sondern müssen vorverarbeitet, möglicherweise auch teildecodiert werden.

Der RFID-Lesetunnel weist bevorzugt eine an dem Lesebereich angebrachte Sendeantenne auf, um ein Trägersignal in den Lesebereich auszusenden, welches Transponder in dem Lesebereich für die Energie zum Abstrahlen der RFID-Signale versorgt. Damit können passive Transponder ausgelesen werden. Die Sendeantenne erreicht nach Möglichkeit nur den Lesebereich. Das ist nicht vollständig zu gewährleisten, andernfalls würde das durch die zusätzliche Empfangsantenne gelöste Problem der Falschlesungen gar nicht auftreten. Noch bevorzugter sind Sendeantenne und Lese-Empfangsantenne dieselbe Antenne. So kann ein Bauelement eingespart werden. Bei der RFID-Lesevorrichtung handelt es sich vorzugsweise um eine UFH-RFID-Lesevorrichtung, wobei mit Lesevorrichtung stets auch eine Schreib-/Lesevorrichtung gemeint sein kann.

Der RFID-Lesetunnel weist bevorzugt eine Abschirmung auf, wobei der Lesebereich und die Lese-Empfangsantenne innerhalb der Abschirmung und die zusätzliche Empfangsantenne außerhalb der Abschirmung angeordnet ist. Die Abschirmung soll erreichen, dass das Trägersignal der Sendeantenne selektiv nur in dem Lesebereich empfangen wird und umgekehrt nur RFID-Signale von Transpondern innerhalb des Lesebereichs die Lese-Empfangsantenne erreichen. Die Abschirmung kann dies aber nicht fehlerfrei leisten, schon wegen der Öffnungen, durch welche Objekte mit Transpondern in den Lesebereich hinein und aus dem Lesebereich heraus gelangen. Aufgrund der erfindungsgemäß eingesetzten zusätzlichen Empfangsantenne kann andererseits die Abschirmung deutlich weniger aufwändig gestaltet und im Grenzfall sogar ganz weggelassen werden.

Die Abschirmung umgibt bevorzugt den Lesebereich bis auf Öffnungen für den Förderer und auf dem Förderer befindlicher Objekte oder bis auf den Durchgang selbst. Damit wird der Lesebereich bestmöglich geschirmt, um die Falschlesungsüberprüfung zu unterstützen.

Die zusätzliche Empfangsantenne ist bevorzugt an einer dem Lesebereich abgewandten Außenseite der Abschirmung angebracht. Die Außenseite der Abschirmung bietet Positionen und Anordnungen für die zusätzliche Empfangsantenne, mit denen sehr zuverlässig sichergestellt werden kann, dass RFID-Signale des Lesebereichs die zusätzliche Empfangsantenne nicht erreichen. RFID-Signale von Transpondern außerhalb des Lesebereichs, die nach Reflexionen über die Lese-Empfangsantenne eine Falschlesung verursachen könnten, werden dadurch mit oft direkter Sichtlinie gut empfangbar.

Vorteilhafterweise ist mindestens eine weitere zusätzliche Empfangsantenne vorgesehen, wobei die Auswertungseinheit dafür ausgebildet ist, bei der Falschlesungsüberprüfung RFID-Informationen zu verwerfen, wenn das zu der RFID-Information gehörige RFID-Signal sowohl von der Lese-Empfangsantenne als auch von mindestens einer der zusätzlichen Empfangsantennen empfangen wird. Durch solche weiteren zusätzlichen Empfangsantennen können noch mehr potentielle Quellen von Falschlesungen erkannt werden, um die Leserate des RFID-Tunnels weiter zu erhöhen. Die Eigenschaften der weiteren zusätzlichen Empfangsantennen hinsichtlich deren Ausbildung, Anordnung, Auswertung und dergleichen sind analog der zusätzlichen Empfangsantenne, wenn es nur eine solche zusätzliche Empfangsantenne gibt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung eines erfindungsgemäßen RFID-Lesetunnels an einem Förderband; und
- Fig. 2: eine schematische Schnittdarstellung einer weiteren Ausführungsform eines erfindungsgemäßen RFID-Lesetunnels.

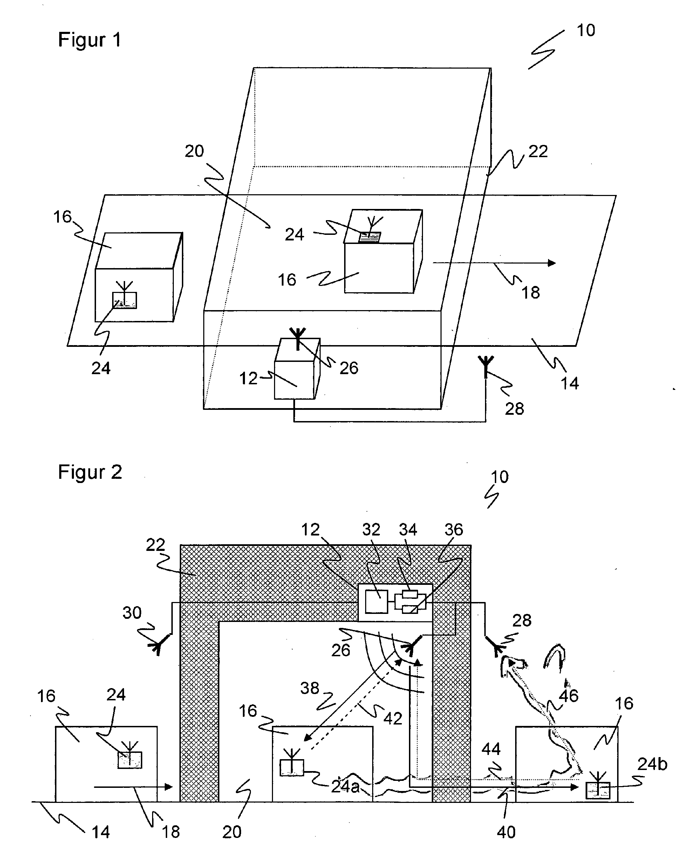

Figur 1 zeigt eine Übersichtsdarstellung eines erfindungsgemäßen RFID-Tunnels 10. Ein RFID-Leser 12 ist an einem Förderer 14 montiert, welcher Objekte 16 in einer durch einen Pfeil 18 bezeichneten Richtung durch einen Lesebereich 20 fördert. Über dem Lesebereich 20 ist eine nur schematisch dargestellte elektromagnetische Abschirmung 22 vorgesehen.

An den Objekten 16 sind RFID-Transponder 24 angeordnet, die von dem RFID-Leser 12 ausgelesen werden, wenn sie sich in dem Lesebereich 20 befinden. Zu diesem Zweck weist der RFID-Leser 12 eine Lese-Empfangsantenne 26 zum Empfangen von RFID-Signalen auf. Die Antenne 26 kann außerdem als Sendeantenne für Schreibvorgänge auf einen RFID-Transponder 24 und zur Versorgung von RFID-Transpondern 24 mit einem Trägersignal verwendet werden. Alternativ ist hierfür eine nicht dargestellte separate Sendeantenne vorgesehen. Der Aufbau eines RFID-Lesers 12 und eines Transponders 24 sowie deren Kommunikation untereinander sind dem Fachmann an sich bekannt.

Außerhalb des Lesebereichs 20 befindet sich eine zusätzliche Empfangsantenne 28, die mit dem RFID-Leser 12 verbunden ist. Die zusätzliche Empfangsantenne 28 wird derart angeordnet und ausgerichtet, dass sie nur Signale von Transpondern 24 außerhalb des Lesetunnels 10 und damit keine RFID-Signale aus dem Lesebereich 20 empfängt. Damit lauscht die zusätzliche Empfangsantenne 28 auf RFID-Transponder 24, die sich nicht in dem Lesebereich 20 befinden.

Abweichend von der Darstellung kann der so entstehende Lesetunnel 10 weitere RFID-Leser beziehungsweise Antennen umfassen, um RFID-Signale aus dem Lesebereich 20 an weiteren Positionen und aus weiteren Richtungen zu erfassen. Ebenso sind möglicherweise andere Sensoren vorgesehen, um zusätzliche Informationen über die Objekte 14 zu gewinnen, beispielsweise deren Eintritt in den Lesebereich 20 und Austritt aus dem Lesebereich 20 oder das Volumen beziehungsweise Gewicht der Objekte 16. Schließlich umfasst die Erfindung auch Leseportale, an denen kein automatischer Förderer 14 vorgesehen ist, sondern bei dem sich Fahrzeuge oder Personen durch einen als Leseportal gestalteten Lesetunnel bewegen, die Objekte 16 mit sich führen können.

Der RFID-Leser 12 nutzt das Signal der zusätzlichen Empfangsantenne 28, um Falschlesungen von RFID-Transpondern 24 zu erkennen, die sich während des Lesens nicht in dem Lesebereich 20 befinden. Dies wird anhand der Figur 2 beschrieben, welche einen RFID-Lesetunnel 10 im Schnitt zeigt und sich von der Ausführungsform gemäß Figur 1 nur darin unterscheidet, dass eine weitere zusätzliche Empfangsantenne 30 vorgesehen ist und einige innere Elemente des RFID-Lesers 12 zeigt.

Wie Figur 2 zeigt, weist der RFID-Leser 12 eine Auswertungseinheit 32 auf, welche zugleich die Steuerung des RFID-Lesers 12 darstellt. Alternativ oder zusätzlich kann eine nicht dargestellte Steuerung außerhalb des RFID-Lesers 12 vorgesehen sein, welche diese Steuerungs- und Auswertungsaufgaben übernimmt oder unterstützt. Eine Sendetreiberschaltung 34 und eine Empfangsschaltung 36 ist sowohl mit der Auswertungseinheit 32 als auch mit den Antennen 26, 28, 30 verbunden, um elektromagnetische RFID-Signale zu senden oder zu empfangen. Dabei sind die zusätzlichen Antennen 28, 30 vorzugsweise reine Empfangsantennen, während die Lese-Empfangsantenne 26 zusätzlich ein Trägersignal und RFID-Signal aussendet.

Mit durchgezogenen Pfeilen 38, 40 sind Ausbreitungswege des Trägersignals bezeichnet. Dabei ist der direkte Ausbreitungsweg 38 von der Antenne 26 zu einem Transponder 24a in dem Lesebereich 20 erwünscht, wohingegen der indirekte Ausbreitungsweg 40 aufgrund von Reflexionen entsteht und damit auch Transponder 24b außerhalb des Lesebereichs 20 erreicht.

Deshalb erreicht nicht nur das mit einem gestrichelten Pfeil 42 dargestellte erwünschte RFID-Signal des Transponders 24a innerhalb des Lesebereichs 20 die Lese-Empfangsantenne 26. Auch ein mit einem gepunkteten Pfeil 44 dargestelltes RFID-Signal von einem Transponder 24b außerhalb des Lesebereichs 20 gelangt unbeabsichtigt aufgrund von Reflexionen zur Lese-Empfangsantenne 26. Der RFID-Leser 12 decodiert deshalb die RFID-Information sowohl des Transponders 24a innerhalb des Lesebereichs als auch des Transponders 24b außerhalb des Lesebereichs und hat zunächst keine Möglichkeit zu erkennen, welche dieser RFID-Informationen relevant sind.

Das mit einem gepunkteten Pfeil 46 dargestellte RFID-Signal des Transponders 24b erreicht aber auch die zusätzliche Empfangsantenne 28. Die Auswertungseinheit 32 kann deshalb durch Vergleich der empfangenen Signale innerhalb und außerhalb des Lesetunnels 10 den Transponder 24a innerhalb des Lesebereichs 20 und den Transponder 24a außerhalb des Lesebereichs 20 unterscheiden.

Durch die zusätzliche lauschende Empfangsantenne 28 außerhalb des Lesebereichs 20 wird somit eine Falschlesungsüberprüfung in der Auswertungseinheit 32 möglich. Transponder 24b, die sowohl innen wie außen gelesen werden können, werden dabei als "false positive reads" erkannt und deren RFID-Informationen verworfen. Damit kann die Rate korrekter RFID-Lesungen des Lesetunnels 10 und die richtige Zuordnung zwischen RFID-Informationen und Objekten 16 erheblich verbessert werden.

Wie in Figur 2 gezeigt, können weitere zusätzliche Empfangsantennen 30 vorgesehen sein, um weitere Bereiche abzudecken, aus denen Falschlesungen von Transpondern 24 möglich sind. Dabei kann wie dargestellt der Eingangs- und Ausgangsbereich des RFID-Tunnels 10 überprüft werden. Ebenso könnte aber auch die Förderrichtung 18 in Figur 2 um 90° gedreht werden, so dass also Objekte 16 in die Papierebene hinein gefördert würden. Dann lauschen die zusätzlichen Empfangsantennen 28, 30 auf die Seitenbereiche des RFID-Lesetunnels, wo sich beispielsweise weitere RFID-Lesestraßen befinden. Dieses Beispiel illustriert, dass die Anzahl und Anordnung zusätzlicher Empfangsantennen 28, 30 vorteilhaft variiert werden kann.

## Patentansprüche

1. RFID-Lesetunnel (10) mit mindestens einer an einem Lesebereich (20) eines Förderers (14) oder eines Durchgangs montierten RFID-Lesevorrichtung (12) zum Auslesen von RFID-Transpondern (24) in dem Lesebereich (20), wobei die RFID-Lesevorrichtung (10) eine an dem Lesebereich (20) angebrachte Lese-Empfangsantenne (26) zum Empfangen von RFID-Signalen aus dem Lesebereich (20) und eine Auswertungseinheit (32) zum Auslesen einer RFID-Information aus den RFID-Signalen aufweist,
**gekennzeichnet durch**
eine zusätzliche Empfangsantenne (28) zum Empfang von RFID-Signalen, die so angebracht ist, dass RFID-Signale aus dem Lesebereich (20) von der zusätzlichen Empfangsantenne (28) möglichst nicht empfangen werden, indem die zusätzliche Empfangsantenne (28) in genügend großem Abstand ohne direkte Sichtlinie auf den Lesebereich (20) und/oder hinter mindestens einem für elektromagnetische Strahlung undurchlässigen Hindernis angebracht und ausgerichtet ist, wobei die Auswertungseinheit (32) für eine Falschlesungsüberprüfung ausgebildet ist, bei der RFID-Informationen verworfen werden, wenn die Auswertungseinheit (32) **durch** Vergleich feststellt, dass das zu der RFID-Information gehörige RFID-Signal sowohl von der Lese-Empfangsantenne (26) als auch von der zusätzlichen Empfangsantenne (28) empfangen worden ist.

2. RFID-Lesetunnel (10) nach Anspruch 1,
wobei die Auswertungseinheit (32) dafür ausgebildet ist, RFID-Informationen sowohl aus mit der Lese-Empfangsantenne (26) empfangenen RFID-Signalen als auch mit der zusätzlichen Empfangsantenne (28) empfangenen RFID-Signalen auszulesen und bei der Falschlesungsüberprüfung die RFID-Informationen der Lese-Empfangsantenne (26) und der zusätzlichen Empfangsantenne (28) miteinander zu vergleichen.

3. RFID-Lesetunnel (10) nach einem der vorhergehenden Ansprüche,
der eine an dem Lesebereich (20) angebrachte Sendeantenne (26) aufweist, um ein Trägersignal in den Lesebereich (20) auszusenden, welches Transponder (24) in dem Lesebereich (20) für die Energie zum Abstrahlen der RFID-Signale versorgt, wobei insbesondere Sendeantenne und Lese-Empfangsantenne dieselbe Antenne (26) sind.

4. RFID-Lesetunnel (10) nach einem der vorhergehenden Ansprüche,
der eine Abschirmung (22) aufweist, wobei der Lesebereich (20) und die Lese-Empfangsantenne (26) innerhalb der Abschirmung (22) und die zusätzliche Empfangsantenne (28) außerhalb der Abschirmung (22) angeordnet ist.

5. RFID-Lesetunnel (10) nach Anspruch 4,
wobei die Abschirmung (22) den Lesebereich (20) bis auf Öffnungen für den Förderer (14) und auf dem Förderer (14) befindlicher Objekte (16) oder bis auf den Durchgang umgibt.

6. RFID-Lesetunnel (10) nach Anspruch 4 oder 5,
wobei die zusätzliche Empfangsantenne (28) an einer dem Lesebereich (20) abgewandten Außenseite der Abschirmung (22) angebracht ist.

7. RFID-Lesetunnel (10) nach einem der vorhergehenden Ansprüche,
wobei mindestens eine weitere zusätzliche Empfangsantenne (30) vorgesehen ist, und wobei die Auswertungseinheit (32) dafür ausgebildet ist, bei der Falschlesungsüberprüfung RFID-Informationen zu verwerfen, wenn das zu der RFID-Information gehörige RFID-Signal sowohl von der Lese-Empfangsantenne (26) als auch von mindestens einer der zusätzlichen Empfangsantennen (28, 30) empfangen wird.

8. Verfahren zum Auslesen von RFID-Transpondern (24) in einem Lesebereich (20) eines RFID-Lesetunnels (10) an einem Förderer (14) oder einem Durchgang, wobei mit einer an dem Lesebereich (20) angebrachten Lese-Empfangsantenne (26) RFID-Signale aus dem Lesebereich (20) empfangen werden und aus den RFID-Signalen eine RFID-Information ausgelesen wird, **dadurch gekennzeichnet,**
**dass** in einer Falschlesungsüberprüfung RFID-Informationen verworfen werden, wenn durch Vergleich der empfangenen Signale festgestellt wird, dass das zu der RFID-Information gehörige RFID-Signal sowohl von der Lese-Empfangsantenne (26) als auch von mindestens einer zusätzlichen Empfangsantenne (28, 30) zum Empfangen von RFID-Signalen empfangen worden ist, die so angebracht ist, dass von der zusätzlichen Empfangsantenne (28, 30) RFID-Signale aus dem Lesebereich (20) möglichst nicht empfangen werden, indem die zusätzliche Empfangsantenne (28) in genügend großem Abstand ohne direkte Sichtlinie auf den Lesebereich (20) und/oder hinter mindestens einem für elektromagnetische Strahlung undurchlässigen Hindernis angebracht und ausgerichtet ist.

9. Verfahren nach Anspruch 8,
wobei die Lese-Empfangsantenne (26) innerhalb einer Abschirmung (22) und die mindestens eine zusätzliche Empfangsantenne (28, 30) außerhalb der Abschirmung (22) angeordnet wird, insbesondere die mindestens eine zusätzliche Empfangsantenne (28, 30) an einer dem Lesebereich (20) abgewandten Auβenseite der Abschirmung (22) angebracht wird.

## Claims

1. An RFID reading tunnel (10) comprising at least one RFID reading apparatus (12) installed at a reading zone (20) of a conveyor (14) or of a passageway for reading RFID transponders (24) in the reading zone (20), wherein the RFID reading apparatus (10) has a reading reception antenna (26) attached to the reading zone (20) for receiving RFID signals from the reading zone (20) and an evaluation unit (32) for reading out RFID information from the RFID signals, **characterized by**
an additional reception antenna (28) for receiving RFDI signals which is attached so that RFID signals from the reading zone (20) are as far as possible not received by the additional reception antenna (28) by arranging and adjusting the additional reception antenna (28) in a sufficiently large distance without direct line of sight to the reading zone (20) and/or behind at least one barrier impenetrable for electromagnetic radiation, with the evaluation unit (32) being designed for a false reading check in which RFID information is discarded when the evaluation unit (32) detects by a comparison that the RFID signal belonging to the RFID information has been received both by the reading reception antenna (26) and by the additional reception antenna (28).

2. An RFID reading tunnel (10) in accordance with claim 1,
wherein the evaluation unit (32) is designed to read out RFID information both from RFID signals received by the reading reception antenna (26) and RFID signals received by the additional reception antenna (28) and to compare the RFID information of the reading reception antenna (26) and of the additional reception antenna (28) with one another on the false reading check.

3. An RFID reading tunnel (10) in accordance with any of the preceding claims,
which has a transmission antenna (26) attached to the reading zone (20) to transmit a carrier signal into the reading zone (20) which supplies transponders (24) in the reading zone (20) with the energy for radiating the RFID signals, wherein in particular the transmission antenna and the reading reception antenna are the same antenna (26).

4. An RFID reading tunnel (10) in accordance with any of the preceding claims,
which has a shield (22), with the reading zone (20) and the reading reception antenna (26) being arranged within the shield (22) and the additional reception antenna (28) being arranged outside the shield (22).

5. An RFID reading tunnel (10) in accordance with claim 4,
wherein the shield (22) surrounds the reading zone (20) with the exception of openings for the conveyor (14) and objects (16) located on the conveyor (14) or except for the passageway.

6. An RFID reading tunnel (10) in accordance with claim 4 or 5,
wherein the additional reading antenna (28) is attached to an outer side of the shield (22) remote from the reading zone (20).

7. An RFID reading tunnel (10) in accordance with any of the preceding claims,
wherein at least one further additional reception antenna (30) is provided, and wherein the evaluation unit (32) is designed to discard RFID information in the false reading check if the RFID signal belonging to the RFID information is received both by the reading reception antenna (26) and by at least one of the additional reception antennas (28, 30).

8. A method for reading RFID transponders (24) in a reading zone (20) of an RFID reading tunnel (10) at a conveyor (14) or at a passageway, wherein RFID signals from the reading zone (20) are received by a reading reception antenna (26) attached to the reading zone (20) and RFID information is read out of the RFID signals, **characterized in that**
RFID information is discarded in a false reading check when by a comparison of the received signals it is determined that the RFID signal belonging to the RFID information has been received both by the reading reception antenna (26) and by at least one additional reception antenna (28, 30) for reading RFID signals which is attached so that RFID signals from the reading zone (20) as far as possible are not received by the additional reception antenna (28, 30) by arranging and adjusting the additional reception antenna (28) in a sufficiently large distance without direct line of sight to the reading zone (20) and/or behind at least one barrier impenetrable for electromagnetic radiation.

9. A method in accordance with claim 8,
wherein the reading reception antenna (26) is arranged within a shield (22) and the at least one additional reception antenna (28, 30) is arranged outside the shield (22), in particular the at least one additional reception antenna (28, 30) is attached to an outer side of the shield (22) remote from the reading zone (20).

## Revendications

1. Tunnel de lecture RFID (10) comprenant au moins un dispositif de lecture RFID (12) monté au niveau d'une zone de lecture (20) d'un convoyeur (14) ou d'une traversée, destiné à lire des transpondeurs RFID (24) dans la zone de lecture (20), dans lequel le dispositif de lecture RFID (10) comprend une antenne de réception-lecture (26) montée au niveau de la zone de lecture (20) pour recevoir des signaux RFID provenant de la zone de lecture (20) et une unité d'évaluation (32) pour lire une information RFID à partir des signaux RFID, **caractérisé par**
une antenne de réception additionnelle (28) pour recevoir des signaux RFID, qui est montée de telle façon que des signaux RFID provenant de la zone de lecture (20) ne peuvent autant que possible pas être reçus par l'antenne de réception additionnelle (28) du fait que l'antenne de réception additionnelle (28) est montée et orientée à une distance suffisamment élevée et sans ligne de vision directe sur la zone de lecture (20) et/ou derrière au moins un obstacle non transparent au rayonnement électromagnétique, dans lequel l'unité d'évaluation (32) est réalisée pour le contrôle de lecture erronée, contrôle dans lequel une information RFID est rejetée si l'unité d'évaluation (32) constate, par comparaison, que le signal RFID appartenant à l'information RFID a été reçu aussi bien par l'antenne de réception-lecture (26) que par l'antenne de réception additionnelle (28).

2. Tunnel de lecture RFID (10) selon la revendication 1,
dans lequel l'unité d'évaluation (32) est réalisée pour lire des informations RFID aussi bien à partir de signaux RFID reçus avec l'antenne de réception-lecture (26) qu'avec l'antenne de réception additionnelle (28) et, lors du contrôle de lecture erronée, pour comparer les unes aux autres les informations RFID de l'antenne de réception-lecture (26) et de l'antenne de réception additionnelle (28).

3. Tunnel de lecture RFID (10) selon l'une des revendications précédentes,
qui comprend une antenne d'émission (26) montée au niveau de la zone de lecture (20), afin d'émettre un signal porteur vers la zone de lecture (20), lequel alimente le transpondeur (24) dans la zone de lecture (20) en énergie pour rayonner les signaux RFID, et l'antenne d'émission et l'antenne de réception-lecture sont en particulier la même antenne (26).

4. Tunnel de lecture RFID (10) selon l'une des revendications précédentes,
qui comprend un écran (22), dans lequel la zone de lecture (20) et l'antenne de réception-lecture (26) sont agencées à l'intérieur de l'écran (22) et l'antenne de réception additionnelle (28) est agencée à l'extérieur de l'écran (22).

5. Tunnel de lecture RFID (10) selon la revendication 4,
dans lequel l'écran (22) entoure la zone de lecture (20) à l'exception d'ouvertures pour le convoyeur (14) et des objets (16) qui se trouvent sur le convoyeur, ou à l'exception de la traversée.

6. Tunnel de lecture RFID (10) selon la revendication 4 ou 5,
dans lequel l'antenne de réception additionnelle (28) est montée sur une face extérieure, détournée de la zone de lecture (20), de l'écran (22).

7. Tunnel de lecture RFID (10) selon l'une des revendications précédentes,
dans lequel il est prévu au moins une autre antenne de réception additionnelle (30), et dans lequel l'unité d'évaluation (32) est réalisée, lors du contrôle de lecture erronée, pour rejeter des informations RFID lorsque le signal appartenant aux informations RFID est reçu aussi bien par l'antenne de réception-lecture (26) que par l'une au moins des antennes de réception additionnelles (28, 30).

8. Procédé pour lire des transpondeurs RFID (24) dans une zone de lecture (20) d'un tunnel de lecture RFID (10) sur un convoyeur (14) ou dans une traversée, dans lequel des signaux RFID provenant de la zone de lecture (20) sont reçus avec une antenne de réception-lecture (26) montée au niveau de la zone de lecture (20) est des informations RFID sont lues à partir des signaux RFID,
**caractérisé en ce que**
dans un contrôle de lecture erronée, on rejette des informations RFID si, par comparaison des signaux reçus on constate que le signal RFID appartenant aux informations RFID a été reçu aussi bien par l'antenne de réception-lecture (26) que par ladite au moins une autre antenne de réception additionnelle (28, 30) pour la réception de signaux RFID, laquelle est montée de telle façon que les signaux RFID provenant de l'antenne de réception additionnelle (28, 30) et provenant de la zone de lecture ne sont autant que possibles pas reçus, du fait que l'antenne de réception additionnelle (28) est montée et orientée à une distance suffisamment élevée et sans ligne de vision directe vers la zone de lecture (20) et/ou derrière au moins un obstacle qui ne laisse pas traverser le rayonnement électromagnétique.

9. Procédé selon la revendication 8,
dans lequel l'antenne de réception-lecture (26) est agencée à l'intérieur d'un écran (22), et ladite au moins une antenne de réception additionnelle (28, 30) est agencée à l'extérieur de l'écran (22), en particulier ladite au moins une antenne de réception additionnelle (28, 30) est montée sur une face extérieure de l'écran (22), détournée de la zone de lecture (20).
